# EUROPEAN PATENT SPECIFICATION

(11) **EP 1 576 049 B1**
(45) Date of publication and mention of the grant of the patent: **12.07.2006**
(21) Application number: 03813886.3
(22) Date of filing: 10.12.2003
(51) Int. Cl.: C08L 23/04, C08F 297/08

(54) **POLYETHYLENE COMPOSITION FOR PRODUCING L-RING DRUMS**
POYLETHYLENZUSAMMENSETZUNG ZUR HERSTELLUNGVON L-RING-CONTAINERN
COMPOSITION DE POLYETHYLENE SERVANT A PRODUIRE DES FUTS DE TYPE L-RING

(30) Priority: 24.12.2002 DE 10261064; 05.02.2003 US 445165 P
(43) Date of publication of application: 21.09.2005
(73) Proprietor: Basell Polyolefine GmbH, 50389 Wesseling (DE)
(72) Inventor: BERTHOLD, Joachim, 65779 Kelkheim (DE); BÖHM, Ludwig, 65795 Hattersheim (DE); KRÜMPEL, Peter, 65520 Bad Camberg (DE); MANTEL, Rainer, 67549 Worms (DE)
(86) International application number: PCT/EP2003/013974
(87) International publication number: WO 2004/058877

(56) References cited:
- EP-A- 0 603 935
- DE-A- 19 945 980
- US-A- 4 336 352
- US-A- 4 536 550
- US-B1- 6 242 548

## Description

The present invention relates to a polyethylene composition with multimodal molecular mass distribution, which is particularly suitable for the blow molding of L-ring drums with a capacity (volume) in the range of from 50 to 250 dm³ (I), and to a process for preparing this composition in the presence of a catalytic system composed of a Ziegler catalyst and a cocatalyst like triethylaluminum, triisobutylaluminum, alkylaluminumchlorides and alkylaluminumhydrides, by way of a multistage process composed of successive slurry polymerizations. The invention further relates to the L-ring containers produced from the composition by blow molding.

Polyethylene is widely used for producing moldings of all types requiring a material with particularly high mechanical strength, high corrosion resistance, and absolutely reliable long-term stability. Another particular advantage of polyethylene is that it also has good chemical resistance and is intrinsically a light-weight material.

EP-A-603,935 has previously described a blow molding composition based on polyethylene and having a bimodal molecular mass distribution, and suitable for the production of moldings with good mechanical properties.

US-A 5,338,589 describes a material with even wider molecular mass distribution, prepared using a high-mileage catalyst known from WO 91/18934, in which the magnesium alcoholate is used in the form of a gel-like suspension. Surprisingly, it has been found that the use of this material in moldings permits simultaneous improvement in properties which are usually contrary correlated in semicrystalline thermoplastics, these being stiffness on the one hand and stress-crack resistance and toughness on the other hand.

However, the known bimodal products, in particular, have relatively low melt strength during processing. This means that the extruded parison frequently break in the molten state, making the extrusion process unacceptably sensitive to processing. In addition, especially when thick-walled containers are being produced, the wall thickness is found to be non-uniform, due to flow of the polymer melt from upper regions into lower regions of the molding before solidification.

It is an objective of the present invention, therefore, to develop a polyethylene composition for blow molding which shows a further improvement over all of the known materials in processing by blow molding to produce L-ring drums. In particular, the high melt strength of the composition should permit to run an extrusion process without parison disruption over a long time period, whereas the precisely adjusted swell ratio of the composition should permit optimization of wall-thickness control. In addition, the molding composition has to be sufficiently tough for forklift and truck transportation of filled L-ring drums.

We have surprisingly found that this objective is achieved by way of a composition as mentioned at the outset, the characterizing features of which are that it comprises from 35 to 45 % by weight of a low-molecular-mass ethylene homopolymer A, from 34 to 44 % by weight of a high-molecular-mass copolymer B made from ethylene and from another 1-olefin having from 4 to 8 carbon atoms, and from 18 to 26 % by weight of an ultrahigh-molecular-mass ethylene copolymer C, wherein all of the percentage data are based on the total weight of the molding composition.

The invention also relates to a process for preparing this composition in a cascaded slurry polymerization and to a process for producing, from this composition, L-ring drums with a capacity or volume in the range of from 50 to 250 dm³ (l) and with quite excellent mechanical strength properties.

The polyethylene composition of the invention has a density in the range of from 0.950 to 0.956 g/cm³ at 23 °C, and a broad trimodal molecular mass distribution. The high-molecular-mass copolymer B contains only small proportions of other 1-olefin monomer units having from 4 to 8 carbon atoms, namely less than 0.1 % by weight. Examples of these comonomers are 1-butene, 1-pentene, 1-hexene, 1-octene, or 4-methyl-1-pentene. The ultrahigh-molecular-mass ethylene homo- or copolymer C also contains an amount in the range from 0.1 to 0.6 % by weight of one or more of the above-mentioned co-monomers.

The polymer composition of the invention also has a melt flow index ISO 1133 in the range of from 1.5 to 3.5 dg/min expressed in terms of MFR_{190/21.6}, and a viscosity number VNₜₒₜ in the range of from 500 to 600 cm³/g measured according to ISO/R 1191 in decalin at 135 °C.

The trimodality is a measure of the position of the centers of gravity of the three individual molecular mass distributions, and can be described with the aid of the viscosity number VN to ISO/R 1191 of the polymers formed in the successive polymerization stages. The relevant band widths for the polymers formed in each of the stages of the reaction are therefore as follows:

The viscosity number VN₁ measured on the polymer after the first polymerization stage is identical with the viscosity number VN_{A} of the low-molecular-mass polyethylene A and according to the invention is in the range of from 160 to 220 cm³/g.

The viscosity number VN₂ measured on the polymer after the second polymerization stage is not equal to VN_{B} of the high-molecular-mass polyethylene B formed in the second polymerization stage, which can only be determined by calculation, but rather represents the viscosity number of the mixture of polymer A and polymer B. According to the invention, VN₂ is in the range of from 230 to 320 cm³/g.

The viscosity number VN₃ measured on the polymer after the third polymerization stage is not equal to VN_{C} of the ultra-high-molecular-mass copolymer C formed in the third polymerization stage, which can only be determined by calculation, but rather represents the viscosity number of the mixture of polymer A, polymer B, and polymer C. According to the invention, VN₃ is in the range of from 500 to 600 cm³/g.

The polyethylene is obtained by polymerizing the monomers in slurry in a temperature range of from 60 to 90 °C, at a pressure in the range of from 0,15 to 1 MPa, and in the presence of a high-mileage Ziegler catalyst composed of a transition metal compound and of triethylaluminum as organoaluminum compound. The polymerization is conducted in three stages, i.e. in three stages arranged in series, each molecular mass being regulated with the aid of a hydrogen feed.

The polyethylene composition of the invention may comprise other additives alongside the polyethylene. Examples of these additives are heat stabilizers, antioxidants, UV absorbers, light stabilizers, metal deactivators, compounds which destroy peroxide, and basic co-stabilizers in amounts of from 0 to 10 % by weight, preferably from 0 to 5 % by weight, and also fillers, reinforcing agents, plasticizers, lubricants, emulsifiers, pigments, optical brighteners, flame retardants, antistats, blowing agents, or a combination of these, in total amounts of from 0 to 50 % by weight, based on the total weight of the mixture.

The composition of the invention is particularly suitable for the blow molding process to produce L-ring drums, by first plastifying the polyethylene composition in an extruder in a temperature range of from 200 to 250 °C and then extruding it through a die into a mold, where it is blown up and then cooled and solidified.

The composition of the invention gives particularly good processing behavior in the blow molding process to give L-ring drums because it has a swell ratio in the range of from 180 to 220 %, and the L-ring drums produced therewith have particularly high mechanical strength because the composition of the invention has a notched impact strength (ISO) in the range of from 60 to 90 kJ/m². The stress-crack resistance (FNCT) is in the range of from 15 to 25 h.

The notched impact strength_{ISO} is measured according to ISO 179-1/1eA / DIN 53453 at 23 °C. The size of the specimen is 10 x 4 x 80 mm, and a V notch is inserted using an angle of 45°, with a depth of 2 mm and with a notch base radius of 0.25 mm.

The stress-crack resistance of the composition of the invention is determined by an internal test method and is given in h. This laboratory method is described by M. Fleißner in Kunststoffe 77 (1987), pp. 45 et seq., and corresponds to ISO/CD 16770, which has since come into force. The publication shows that there is a relationship between determination of slow crack growth in the creep test on specimens with a circumferential notch and the brittle section of the long-term internal- and hydrostatic-pressure test to ISO 1167. In ethylene glycol as stress-crack-promoting medium at 80°C with a tensile stress of 3.5 MPa, the time to failure is shortened due to the shortening of the stress-initiation time by the notch (1.6 mm/razorblade). The specimens are produced by sawing out three specimens of dimensions 10 x 10 x 110 mm from a pressed plaque of thickness 10 mm. These specimens are provided with a central notch, using a razorblade in a notching device specifically manufactured for the purpose (see Figure 5 in the publication). The notch depth is 1.6 mm.

### Working Example

Ethylene was polymerized in a continuous process in three reactors arranged in series. An amount of 5.5 mmol/h of a Ziegler catalyst prepared as specified in WO 91/18934, Example 2, and having the operative number 2.2 in the WO, was fed into the first reactor together with 150 mmol/h triethylaluminum, as well as sufficient amounts of diluent (hexane), ethylene and hydrogen. The amount of ethylene (= 49.4 kg/h) and the amount of hydrogen (= 18 g/h) were adjusted so that the percentage proportion of ethylene and of hydrogen measured in the gas phase of the first reactor were from 49 % by volume and 43 % by volume, respectively, and the rest was a mix of nitrogen and vaporized diluent.

The polymerization in the first reactor was carried out at 73 °C.

The slurry from the first reactor was then transferred into a second reactor, in which the percentage proportion of hydrogen in the gas phase had been reduced to 20 % by volume, and an amount of 15 g/h of 1-butene was added to this reactor alongside with 46.9 kg/h of ethylene. The amount of hydrogen was reduced by way of intermediate H₂ depressurization. 72 % by volume of ethylene, 20 % by volume of hydrogen, and < 0.1 % by volume of 1-butene were measured in the gas phase of the second reactor, the rest being a mix of nitrogen and vaporized diluent.

The polymerization in the second reactor was carried out at 85 °C.

The slurry from the second reactor was transferred to the third reactor using further intermediate H₂ depressurization to adjust the amount of hydrogen to less than 0.1 % by volume in the gas phase of the third reactor.

An amount of 90 g/h of 1-butene was added to the third reactor alongside with an amount of 27.2 kg/h of ethylene. A percentage proportion of 91 % by volume of ethylene, less than 0.1 % by volume of hydrogen, and 0.22 % by volume of 1-butene was measured in the gas phase of the third reactor, the rest being a mix of nitrogen and vaporized diluent.

The polymerization in the third reactor was carried out at 76 °C.

The long-term polymerization catalyst activity required for the cascaded process described above was provided by a specifically developed Ziegler catalyst as described in the WO mentioned at the outset. A measure of the usefulness of this catalyst is its extremely high hydrogen sensitivity and its uniformly high activity over a long time period of between 1 to 8 h.

The diluent is removed from the polymer slurry leaving the third reactor, and the polymer is dried and then pelletized.

Table 1 shown below gives the viscosity numbers and quantitative proportions w_{A}, w_{B}, and w_{C} of polymer A, B, and C for the polyethylene composition prepared in Example 1.

**Table 1**

| Example | |
|---|---|
| density [g/cm³] | 0.953 |
| MFR_{190/21.6} [dg/min] | 2.6 |
| W_{A} [% by weight] | 40 |
| W_{B} [% by weight] | 38 |
| W_{C} [% by weight] | 22 |
| VN₁ [cm³/g] | 210 |
| VN₂ [cm³/g] | 260 |
| VNₜₒₜ [cm³/g] | 540 |
| SR [%] | 200 |
| FNCT [h] | 17.5 |
| NIS_{ISO} [kJ/m²] | 80 |

The abbreviations for physical properties in Table 1 have the following meanings:
- SR (= swell ratio) in [%] measured in a high-pressure capillary rheometer at a shear rate of 1440 s⁻¹, in a 2/2 round-section die with conical inlet (angle = 15°) at 190 °C.
- FNCT = stress-crack resistance (Full Notch Creep Test) tested using the internal test method of M. Fleißner, in [h].
- NlS_{ISO} = notched impact strength measured to ISO 179-1/1eA / DIN 53453 in [kJ/m²] at 23 °C.

## Claims

1. A polyethylene composition with multimodal molecular mass distribution, which has a density in the range of from 0.950 to 0.956 g/cm³ at 23 °C and an MFR_{190/21.6} in the range of from 1.5 to 3.5 dg/min and which comprises from 35 to 45 % by weight of a low-molecular-mass ethylene homopolymer A, from 34 to 44 % by weight of a high-molecular-mass copolymer B made from ethylene and from another 1-olefin having from 4 to 8 carbon atoms, and from 18 to 26 % by weight of an ultrahigh-molecular-mass ethylene copolymer C, wherein all of the percentage data are based on the total weight of the molding composition.

2. A polyethylene molding composition as claimed in claim 1, wherein the high-molecular-mass copolymer B contains small proportions of less than 0.1 % by weight of co-monomer having from 4 to 8 carbon atoms, based on the weight of copolymer B, and wherein the ultrahigh-molecular-mass ethylene copolymer C contains an amount in the range from 0.1 to 0.6 % by weight of co-monomers, based on the weight of copolymer C.

3. A polyethylene composition as claimed in claim 1 or 2, which, as a co-monomer, contains 1-butene, 1-pentene, 1-hexene, 1-octene, 4-methyl-1-pentene, or mixtures of these.

4. A polyethylene composition as claimed in one or more of claims 1 to 3, which has a viscosity number VNₜₒₜ of from 500 to 600 cm³/g measured to ISO/R 1191 in decalin at 135 °C.

5. A polyethylene composition as claimed in one or more of claims 1 to 4, which has a swell ratio in the range from 180 to 220 %, and a notched impact strength (ISO) in the range from 60 to 90 kJ/m², and a stress-crack resistance (FNCT) in the range from 15 to 25 h.

6. A process for producing a polyethylene composition as claimed in one or more of claims 1 to 5, in which the monomers are polymerized in slurry in a temperature range of from 60 to 90 °C at a pressure in the range of from 0.15 to 1.0 MPa, and in the presence of a high-mileage Ziegler catalyst composed of a transition metal compound and of an organoaluminum compound, which comprises conducting polymerization in three stages, wherein the molecular mass of each polyethylene prepared in each stage is regulated with the aid of hydrogen.

7. A process as claimed in claim 6, wherein the hydrogen concentration in the first polymerization stage is adjusted so that the viscosity number VN₁ of the low-molecular-mass polyethylene A is in the range of from 160 to 220 cm³/g.

8. A process as claimed in claim 6 or 7, wherein the hydrogen concentration in the second polymerization stage is adjusted so that the viscosity number VN₂ of the mixture of polymer A and polymer B is in the range of from 230 to 320 cm³/g.

9. A process as claimed in any of claims 6 to 8, wherein the hydrogen concentration in the third polymerization stage is adjusted so that the viscosity number VN₃ of the mixture of polymer A, polymer B, and polymer C is in the range of from 500 to 600 cm³/g.

10. The use of a polyethylene composition as claimed in one or more of claims 1 to 5 for producing L-ring drums with a capacity in the range of from 50 to 250 dm³ (l), where the polyethylene composition is first plasticized in an extruder in a temperature range of from 200 to 250 °C and is then extruded through a die into a mold, where it is blown up and then cooled and solidified.

## Patentansprüche

1. Polyethylen Formmasse mit multimodaler Molmassenverteilung, die eine Dichte bei einer Temperatur von 23 °C im Bereich von 0,950 bis 0,956 g/cm³ besitzt und einen MFI_{190/21,6} im Bereich von 1,5 bis 3,5 dg/min, und die 35 bis 45 Gew.-% eines niedermolekularen Ethylenhomopolymers A, 34 bis 44 Gew.-% eines hochmolekularen Copolymers B aus Ethylen und einem anderen 1-Olefin mit 4 bis 8 C-Atomen und 18 bis 26 Gew.-% eines ultrahochmolekularen Ethylen-copolymers C enthält, wobei alle Prozentangaben bezogen sind auf das Gesamtgewicht der Formmasse.

2. Polyethylen Formmasse nach Anspruch 1, **dadurch gekennzeichnet, dass** das hochmolekulare Copolymer B geringe Anteile, kleiner als 0,1 Gew.-%, an Comonomer mit 4 bis 8 C-Atomen enthält, bezogen auf das Gewicht an Copolymer B, und dass das ultrahochmolekulare Ethylencopolymer C Comonomere in einer Menge im Bereich von 0,1 bis 0,6 Gew.-% enthält, bezogen auf das Gewicht von Copolymer C.

3. Polyethylen Formmasse nach Anspruch 1 oder 2, **dadurch gekennzeichnet, dass** sie als Comonomer 1-Buten, 1-Penten, 1-Hexen, 1-Octen, 4-Methylpenten-1 oder Mischungen von diesen enthält.

4. Polyethylen Formmasse nach einem oder nach mehreren der Ansprüche 1 bis 3, **dadurch gekennzeichnet, dass** sie eine Viskositätszahl VZ_{ges}, gemessen nach ISO/R 1191 in Dekalin bei einer Temperatur von 135 °C, im Bereich von 500 bis 600 cm³/g besitzt.

5. Polyethylen Formmasse nach einem oder nach mehreren der Ansprüche 1 bis 4, **dadurch gekennzeichnet, dass** sie eine Schwellrate im Bereich von 180 bis 220 % besitzt, dass sie eine Kerbschlagzähigkeit (ISO) im Bereich von 60 bis 90 kJ/m² besitzt und dass sie eine Spannungsrissfestigkeit (FNCT) im Bereich von 15 bis 25 h besitzt.

6. Verfahren zum Herstellen einer Polyethylen Formmasse nach einem oder nach mehreren der Ansprüche 1 bis 5, bei dem die Polymerisation der Monomeren in Suspension bei Temperaturen im Bereich von 60 bis 90 °C, einem Druck im Bereich von 0,15 bis 1,0 MPa und in Gegenwart eines hochaktiven Ziegler-Katalysators durchgeführt wird, der aus einer Übergangsmetallverbindung und einer aluminiumorganischen Verbindung zusammengesetzt ist, **dadurch gekennzeichnet, dass** die Polymerisation dreistufig geführt wird, wobei die Molmasse des in jeder Stufe hergestellten Polyethylens jeweils mit Hilfe von Wasserstoff geregelt wird.

7. Verfahren nach Anspruch 6, **dadurch gekennzeichnet, dass** in der ersten Polymerisationsstufe die Wasserstoffkonzentration so eingestellt wird, dass die Viskositätszahl VZ₁ des niedermolekularen Polyethylens A im Bereich von 160 bis 220 cm³/g liegt.

8. Verfahren nach Anspruch 6 oder 7, **dadurch gekennzeichnet, dass** in der zweiten Polymerisationsstufe die Wasserstoffkonzentration so eingestellt wird, dass die Viskositätszahl VZ₂ des Gemisches aus Polymer A plus Polymer B im Bereich von 230 bis 320 cm³/g liegt.

9. Verfahren nach einem der Ansprüche 6 bis 8, **dadurch gekennzeichnet, dass** in der dritten Polymerisationsstufe die Wasserstoffkonzentration so eingestellt wird, dass die Viskositätszahl VZ₃ des Gemisches aus Polymer A, Polymer B plus Polymer C im Bereich von 500 bis 600 cm³/g liegt.

10. Verwendung einer Polyethylen Formmasse nach einem oder nach mehreren der Ansprüche 1 bis 5 zur Herstellung von L-Ring-Containern mit einem Inhalt im Bereich von 50 bis 250 dm³ (l), wobei die Polyethylen Formmasse zunächst in einem Extruder bei Temperaturen im Bereich von 200 bis 250 °C plastifiziert und dann durch eine Düse in eine Blasform gepreßt und dort abgekühlt und verfestigt wird.

## Revendications

1. Composition de polyéthylène ayant une distribution de masse moléculaire multimodale, qui a une densité dans le domaine de 0,950 à 0,956 g/cm³ à 23°C et un MFR_{190/21,6} dans le domaine de 1,5 à 3,5 dg/min, et qui comprend de 35 à 45 % en poids d'un homopolymère A d'éthylène de masse moléculaire basse, de 34 à 44 % en poids d'un copolymère B de masse moléculaire haute constitué d'éthylène et d'une autre 1-oléfine ayant de 4 à 8 atomes de carbone, et de 18 à 26 % en poids d'un copolymère C d'éthylène de masse moléculaire ultra-haute, dans laquelle la totalité des données en pourcentage sont basées sur le poids total de la composition.

2. Composition de moulage de polyéthylène selon la revendication 1, dans laquelle le copolymère B de masse moléculaire haute contient de petites proportions de moins de 0,1 % en poids de comonomère ayant de 4 à 8 atomes de carbone, sur la base du poids du copolymère B, et dans laquelle le copolymère C d'éthylène de masse moléculaire ultra-haute contient une quantité dans le domaine de 0,1 à 0,6 % en poids de comonomères, sur la base du poids du copolymère C.

3. Composition de polyéthylène selon la revendication 1 ou 2, qui, en tant que comonomère, contient du 1-butène, du 1-pentène, du 1-hexene, du 1-octène, du 4-méthyl-1-pentène, ou un mélange de ceux-ci.

4. Composition de polyéthylène selon l'une ou plus des revendications 1 à 3, qui a un indice de viscosité VNₜₒₜ de 500 à 600 cm³/g mesuré conformément à ISO/R 1191 dans de la décaline à 135°C.

5. Composition de polyéthylène selon l'une ou plus des revendications 1 à 4, qui a un taux de gonflement dans le domaine de 180 à 220 %, et une résistance aux chocs à l'entaille (ISO) dans le domaine de 60 à 90 kJ/m² et une résistance à la fissuration sous contrainte (FNCT) dans le domaine de 15 à 25 h.

6. Procédé pour produire une composition de polyéthylène selon l'une ou plus des revendications 1 à 5, dans lequel les monomères sont polymérisés en une boue dans le domaine de température de 60 à 90°C à une pression dans le domaine de 0,15 à 1,0 MPa, et en présence d'un catalyseur de Ziegler à activité élevé constitué d'un composé de métal de transition et d'un composé organo-aluminium, qui comprend la mise en oeuvre de la polymérisation en trois étapes, la masse moléculaire du polyéthylène préparé à chaque étape étant régulée à l'aide d'hydrogène.

7. Procédé selon la revendication 6, dans lequel la concentration en hydrogène dans la première étape de polymérisation est ajustée de sorte que l'indice de viscosité VN₁ du polyéthylène A de masse moléculaire basse se trouve dans le domaine de 160 à 220 cm³/g.

8. Procédé selon la revendication 6 ou 7, dans lequel la concentration en hydrogène dans la deuxième étape de polymérisation est ajustée de sorte que l'indice de viscosité VN₂ du mélange constitué du polymère A et du polymère B se trouve dans le domaine de 230 à 320 cm³/g.

9. Procédé selon l'une quelconque des revendications 6 à 8, dans lequel la concentration en hydrogène dans la troisième étape de polymérisation est ajustée de sorte que l'indice de viscosité VN₃ du mélange constitué du polymère A, du polymère B et du polymère C se trouve dans le domaine de 500 à 600 cm³/g.

10. Utilisation d'une composition de polyéthylène selon l'une ou plus des revendications 1 à 5, pour produire des fûts à segments en L ayant une capacité dans le domaine de 50 à 250 dm³ (l), où la composition de polyéthylène est tout d'abord plastifiée dans une extrudeuse dans le domaine de température de 200 à 250°C et est ensuite extrudée à travers une filière dans un moule, où elle est soufflée et ensuite refroidie et solidifiée.
